# EUROPEAN PATENT APPLICATION

(11) **EP 1 808 652 A2**
(43) Date of publication of application: **18.07.2007**
(21) Application number: 07250092.9
(22) Date of filing: 10.01.2007
(51) Int. Cl.: F24J 3/08

(54) **Geothermal energy system**

(30) Priority: 14.01.2006 GB 0600717
(71) Applicant: Roxbury Limited, Gibraltar (GI)
(72) Inventor: Bullivant, Roger Alfred, Burton-on-Trent Staffordshire DE15 0SS (GB)
(74) Representative: Skinner, Michael Paul

(57) **Abstract**

A heat exchanger 10 is for use in a geothermal energy system for a building 12, for heating and/or cooling. The exchanger 10 has a flask member 14 which defines a chamber 16 for heat exchange fluid. A supply conduit 22 supplies heat exchange fluid to a first port of the chamber 16, from ground level. An exhaust conduit 26 removes heat exchange fluid from a second port 28. The flow direction can be reversed. A pipe 30 extends from the inlet port 24 to an intermediate position 32, generally at the bottom of the chamber, whereas the outlet port 28 is generally at the top of the chamber. Accordingly, fluid entering the chamber must pass down to the bottom of the chamber, before leaving the pipe 30 and then flowing back up the chamber to the outlet port 28.

## Description

The present invention relates to geothermal energy systems and in particular, but not exclusively, to geothermal energy systems for heating and/or cooling buildings.

The present invention provides a heat exchanger component for a geothermal system, comprising:
a flask member having a chamber for receiving heat exchange fluid, the chamber, in use, being situated, at least in part, below ground level, and in thermal contact with the surrounding ground;
the chamber having respective ports for receiving heat exchange fluid supplied from ground level and for returning heat exchange fluid to ground level;
and there being conveying means within the chamber and serving, in use, to convey fluid between a first of the ports and an intermediate position within the chamber, the intermediate position being located generally opposite the other of the ports, within the chamber.

Preferably the chamber is elongate. The other of the ports, preferably the outlet port, and the intermediate position are preferably located at respective end regions of the chamber. The length of the chamber is preferably generally upright. The outlet port is preferably generally at the upper end of the chamber. The inlet port is preferably also generally at the upper end of the chamber.

The conveying means may be a pipe extending from the first port to the intermediate position.

The chamber is preferably provided by a pipe. The conveying means may be a pipe extending within and along the chamber pipe. The pipes are preferably generally parallel and may be concentric.

The conveying means preferably provides thermal insulation between fluid moving between the first port and the intermediate position, and fluid within the chamber.

The flask member may constitute a pile or pile component, pier or pier component, in which case, the flask member preferably extends along substantially the whole length of the pile. The inlet and outlet ports are preferably at or near ground level, when the pile is installed. The flask member preferably forms a load-bearing component of the pile. The flask member may provide reinforcement within a body of material around the flask member. The body may be a body of settable material, such as a cementitious material, grout, or the like. The chamber walls are preferably tubular to provide load bearing and/or reinforcement as aforesaid.

In another aspect, the invention provides a heat exchange system for a building, comprising at least one heat exchange component as defined above, the chamber being connected in a heat exchange circuit for temperature control of the building.

The invention also provides a building having a heat exchange system as defined above.

The invention also provides a method of providing a heat exchange system for a building, comprising:
forming a bore in the ground;
inserting a heat exchange component of the type defined above, into the bore;
using the inlet and outlet ports to connect the heat exchanger into a heat exchange circuit for use in temperature control of the building.

The heat exchange member may be inserted into the bore as part of the construction of a pile within the bore.

Examples of the present invention will now be described in more detail, by way of example only, and with the accompanying drawing which is a schematic diagram of a heat exchanger and geothermal system.

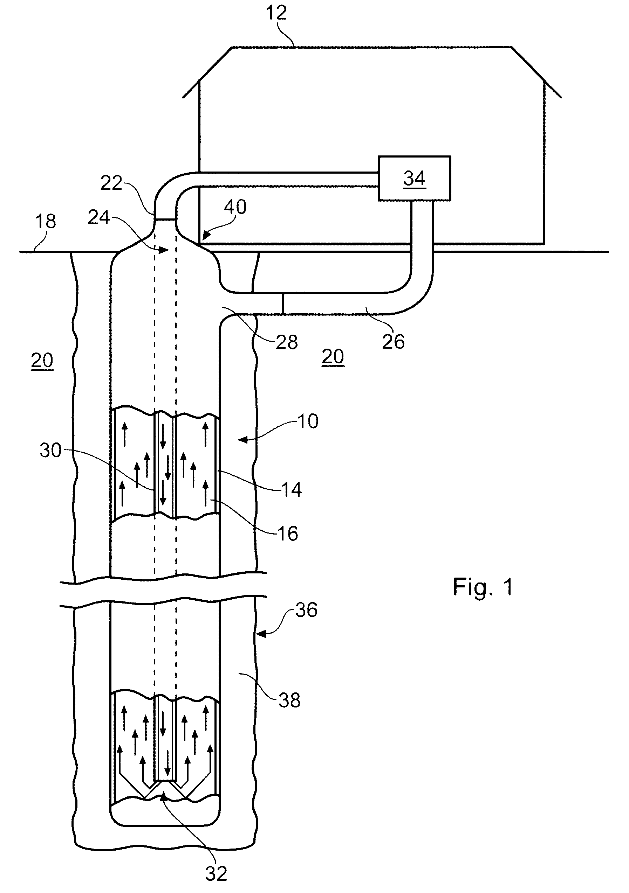

Fig. 1 illustrates a heat exchanger 10 for use in a geothermal energy system for a building 12. The system may be for heating and/or cooling the building, and the terms "heat exchange", "heat exchanger" and the like are used to encompass both alternatives. The heat exchanger 10 has a flask member 14 which defines a chamber 16 for receiving heat exchange fluid. In this example, the chamber 16 is situated almost wholly below ground level 18. Consequently, the chamber 16 is in thermal contact with the surrounding ground 20.

The heat exchange system includes a supply conduit 22 for supplying heat exchange fluid to a first port 24 of the chamber 16, from ground level. An exhaust conduit 26 removes heat exchange fluid from a second port 28 of the chamber 16.

In this example, the first port 24 is used as the inlet port of the chamber 16, and the second port 28 is used as the outlet port of the chamber 16. The terms "supply", "inlet", "exhaust" and "outlet" are used with reference to the example flow direction being described, but it is to be understood that the flow direction through the heat exchanger 10, may be reversed. In particular, the preferred direction of flow may depend on whether temperature control of the building 12 is to provide heating by extracting geothermal energy, or cooling by extracting energy from the building 12 and dispersing this energy into the ground 20.

Within the chamber 16, conveying means in the form of a pipe 30 extends from the inlet port 24 to an intermediate position 32, where the mouth of the pipe 30 opens into the chamber 16. Thus, fluid from the inlet port 24 is directed to the intermediate position 32, at which the fluid is injected into the chamber 16. The injection position 32, and the outlet port 28 are generally opposite each other, within the chamber. In this example, the outlet port 28 is generally at the top of the chamber 16, whereas the injection position 32 is generally at the bottom of the chamber 16.

The supply conduit 22 and the exhaust conduit 26 lead to a second heat exchanger 34 which is in thermal contact with the interior of the building 12. This completes the closed loop of the geothermal system by which heat can be exchanged with the building interior at 34, and with the ground at 10, so that the temperature of the building 12 can be controlled for heating or cooling.

In this example, the chamber 16 is elongate and generally upright to place the inlet port 24 at the upper end of the chamber 16. The injection position 32 is at the lower end of the chamber 16. The outlet port 28 is also at the upper end of the chamber 16.

The pipe 30 extends from the inlet port 24 to the injection position 32, being generally parallel with the central axis of the pipe forming the chamber 16, and preferably concentric with the chamber 16.

The pipe 30 may be formed to provide at least some thermal insulation between fluid within the pipe 30, moving from the inlet port 24 to the injection position 32, and fluid within the chamber 16.

The heat exchanger 10 which has been described, can be inserted into the ground by forming a bore in the ground, e.g. by drilling, and inserting the heat exchanger 10 down into the cavity so formed. This results in a heat exchanger 10 with the sole purpose of providing heat exchange within a geothermal system. It is preferred that the heat exchanger 10 extends down into the ground by at least 2m, at which depth the ground temperature is largely unaffected by surface temperature, weather or seasons, and is thus largely constant, year round. If the heat exchanger 10 is buried more deeply than is shown, appropriate pipes will be required to convey heat exchange fluid between the heat exchanger 10 and the surface of the ground.

In the example being described, the heat exchanger 10 also forms part of a pile or pier 36 which provides support for the building 12. In this example, the heat exchanger 10 is within a body 38 of material, which may be a settable material such as a cementitious material, grout or the like. The tubular form of the flask 14 allows the flask 14 to form a load-bearing component of the pile. Thus, the flask 14 may be coupled with the building 12, at 40, to bear some of the weight of the building 12 and to transmit this load into the ground 20, in the conventional manner of a pile. This is assisted by the provision of the body 38 around the flask 14, to provide enhanced coupling between the pile 36 and the ground 20.

In an alternative, the load from the building 12 may be applied to the body 38, which serves as the principal component of the pile. In this example, the flask 14 serves as reinforcement within the body 38.

In a further example, the heat exchanger 10 may be located within the pile or pier but have no load-bearing or reinforcing function. Additional reinforcement, such as a cage of reinforcing bars, could be provided around the heat exchanger 10.

In either of these examples, the flask 14 preferably extends substantially the whole length of the pile, with the inlet and outlet ports 24, 28 being located at or near ground level, preferably above ground level, as illustrated in Fig. 1.

A typical pile length may be at least 5m.

During use for heating the building 12, heat exchanger fluid is pumped at a relatively low temperature from the heat exchanger 34, through the supply conduit 22 to the inlet port 24. The fluid then passes through the pipe 30 to the intermediate or injection position 32, near the bottom of the chamber 16. The fluid is then able to pass up the chamber 16, around the injection pipe 30, to the outlet port 28. As it does so, the fluid is in thermal contact with the ground 20 around the flask 14. Thus, if the fluid is initially relatively cold, heat can be drawn from the ground 20 to warm the fluid as it moves up the chamber 16. Accordingly, fluid leaving the outlet port 28 will be warmer than the fluid arriving at the inlet port 24. This warmer fluid is then conveyed along the exhaust conduit 26 to the heat exchanger 34, where the heat carried by the fluid is extracted into the building 12, thus heating the building and cooling the heat exchange fluid for the cycle to be repeated.

It is to be noted that the diameter of the pipe 30 is smaller than the diameter of the chamber 16. Consequently, while the volume flow rate through the chamber 16 is equal to the volume flow rate through the pipe 30, the velocity of the fluid within the chamber 16 is lower than the velocity within the pipe 30. Accordingly, a particular volume of fluid spends a longer time moving up the chamber 16, exchanging heat with the ground, than it spends moving down the pipe 30. While moving through the pipe 30, the fluid may exchange heat with the fluid within the chamber 16, subject to the effectiveness of any thermal insulation provided by the pipe 30.

In addition, the surface area for heat exchange between the chamber 16 and the surrounding ground 20 is much greater than the surface area available for heat exchange between the contents of the pipe 30 and the contents of the chamber 16, by virtue of the differences of diameter.

The combination of these effects is expected to result in useful heat exchange with the ground, resulting in a useful temperature difference between the fluid in the supply conduit 22 and the exhaust conduit 26. Heat exchange will be preferentially with the ground, even though some heat exchange may arise between the contents of the pipe 30 and the chamber 16. Both of these effects are enhanced by providing the intermediate position 32 opposite the port 28 (in this case, at opposite ends of the chamber 16) so that the length of the route through the chamber 16 is maximised.

As noted above, the direction of flow could be reversed. In that case, relatively cold fluid entering the port 28 will pass down the chamber 16, being warmed by heat exchange with the ground 20, before entering the pipe 30 at the position 32 and returning up the pipe 30 to the port 24. Again, the flow rates and surface areas involved will create preferential heat exchange between the contents of the chamber 16 and the ground 20, rather than between the contents of the chamber 16 and the contents of the pipe 30, so that the fluid leaving the port 24 will be warmer than the fluid entering the port 28.

The above example has been described in relation to heating the building 12. Alternatively, the heat exchanger 34 may be used to extract heat from the building 12, for cooling the building 12. Relatively warm fluid (above the temperature of the ground 20) is then supplied to the flask 14. Heat exchange with the ground 20 will occur while the warmer fluid is moving through the chamber 16, thus cooling the fluid. Again, heat exchange with the ground will be preferential as compared with heat exchange with the contents of the pipe 30. Accordingly, whichever flow direction is used, the fluid will be cooling during movement through the flask 14, so that cooled fluid is returned to the heat exchanger 34.

Installation of the heat exchanger 10, either alone or as part of a pile, is a relatively simple matter, requiring a ground bore to be drilled or otherwise created, before the heat exchanger 10 is introduced from ground level. The diameter of the flask 14 may be of many different sizes, such as in the range between about 20mm and 1.25m. Techniques for forming long ground cavities at these dimensions are well understood, e.g. from the field of piling. When used as a pile or solely as a heat exchanger, we envisage a flask length of at least 5m, but many other dimensions could be chosen, according to the thermal and load-bearing (if any) requirements.

Many variations and modifications can be made to the apparatus described above, without departing from the scope of the present invention. For example, many different materials may be chosen, according to the performance requirements, including mechanical and thermal requirements.

The heat exchanger 10 has been described as a separate device and as a component of a pile or pier. It is envisaged that a heat exchanger provided for an existing building will generally not be incorporated in a pile or pier, unless some remedial pile or pier formation is being undertaken at the same time. In a situation in which piles or piers are being formed during the construction of a building, or subsequently, it is convenient to install the heat exchanger at the same time, particularly if the heat exchanger is being used as a load-bearing or reinforcing component of the pile or pier.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A heat exchanger component for a geothermal system, comprising:
a flask member having a chamber for receiving heat exchange fluid, the chamber, in use, being situated, at least in part, below ground level, and in thermal contact with the surrounding ground;
the chamber having respective ports for receiving heat exchange fluid supplied from ground level and for returning heat exchange fluid to ground level;
and there being conveying means within the chamber and serving, in use, to convey fluid between a first of the ports and an intermediate position within the chamber, the intermediate position being located generally opposite the other of the ports, within the chamber.

2. A heat exchanger component according to claim 1, wherein the chamber is elongate.

3. A heat exchanger component according to claim 2, wherein the other of the ports and the intermediate position are located at respective end regions of the chamber.

4. A heat exchanger component according to claim 3, wherein the other of the ports is the outlet port.

5. A heat exchanger component according to claim 2, 3, or 4, wherein the length of the chamber is generally upright.

6. A heat exchanger component according to any preceding claim, wherein the outlet port is generally at the upper end of the chamber.

7. A heat exchanger component according to any preceding claim, wherein the inlet port is generally at the upper end of the chamber.

8. A heat exchanger component according to any preceding claim, wherein the conveying means is a pipe extending from the first port to the intermediate position.

9. A heat exchanger component according to any preceding claim, wherein the chamber is provided by a pipe.

10. A heat exchanger component according to claim 9, wherein the conveying means is a pipe extending within and along the chamber pipe.

11. A heat exchanger component according to claim 10, wherein the pipes are generally parallel.

12. A heat exchanger component according to claim 11, wherein the pipes are concentric.

13. A heat exchanger component according to any preceding claim, wherein the conveying means provides thermal insulation between fluid moving between the first port and the intermediate position, and fluid within the chamber.

14. A heat exchanger component according to any preceding claim, wherein the flask member constitutes a pile or pile component, pier or pier component.

15. A heat exchanger component according to claim 14, wherein the flask member extends along substantially the whole length of the pile.

16. A heat exchanger component according to claim 14 or 15, wherein the inlet and outlet ports are at or near ground level, when the pile is installed.

17. A heat exchanger component according to any of claims 1.4 to 16, wherein the flask member forms a load-bearing component of the pile.

18. A heat exchanger component according to any of claims 14 to 17, wherein the flask member provides reinforcement within a body of material around the flask member.

19. A heat exchanger component according to claim 18, wherein the body is a body of settable material.

20. A heat exchanger component according to claim 19, wherein the settable material is cementitious material, grout, or the like.

21. A heat exchanger component according to any of claims 17 to 20, wherein the chamber walls are tubular to provide load bearing and/or reinforcement as aforesaid.

22. A heat exchanger component, substantially as hereinbefore described with reference to the accompanying drawings.

23. A heat exchange system for a building, comprising at least one heat exchange component as defined in any of claims 1 to 22, the chamber being connected in a heat exchange circuit for temperature control of the building.

24. A building having a heat exchange system as defined in claim 23.

25. A method of providing a heat exchange system for a building, comprising:
forming a bore in the ground;
inserting a heat exchange component of the type defined in any of claims 1 to 22 into the bore;
using the inlet and outlet ports to connect the heat exchanger into a heat exchange circuit for use in temperature control of the building.

26. A method according to claim 25, wherein the heat exchange member is inserted into the bore as part of the construction of a pile within the bore.

27. A method, substantially as hereinbefore described above, with reference to the accompanying drawings.

28. Any novel subject matter or combination including novel subject matter disclosed herein, whether or not within the scope of or relating to the same invention as any of the preceding claims.
